Europäisches Patentamt

European Patent Office

Office européen des brevets

(19)

(11) Publication number: **0 015 926**
**B1**

(12) **EUROPEAN PATENT SPECIFICATION**

(45) Date of publication of patent specification: **11.08.82**

(51) Int. Cl.³: **G 01 F 1/32** //F 16 L 23/02

(21) Application number: **79900299.3**

(22) Date of filing: **13.03.79**

(86) International application number:
**PCT/US79/00151**

(87) International publication number:
**WO 79/00785 18.10.79 Gazette 79/21**

(54) **Vortex shedding flowmeter construction.**

(30) Priority: **17.03.78 US 887503**

(43) Date of publication of application:
**01.10.80 Bulletin 80/20**

(45) Publication of the grant of the patent:
**11.08.82 Bulletin 82/32 .**

(84) Designated Contracting States:
**DE FR GB**

(56) References cited:
**DE - A - 2 741 827**
**FR - A - 2 376 400**
**JP - Y - 50 009 015**
**US - A - 3 572 117**
**US - A - 3 693 438**
**US - A - 3 972 232**
**US - A - 4 088 020**

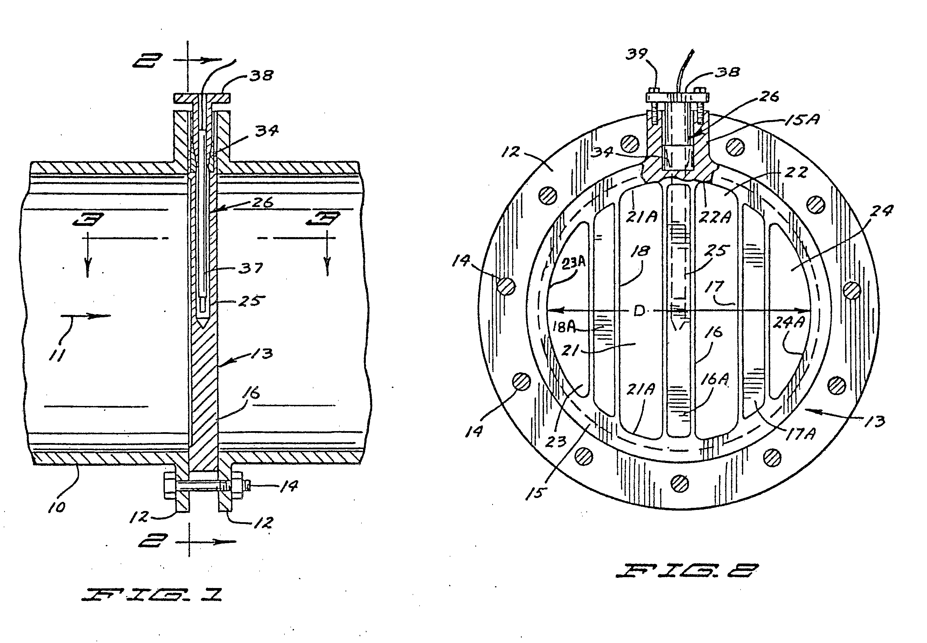

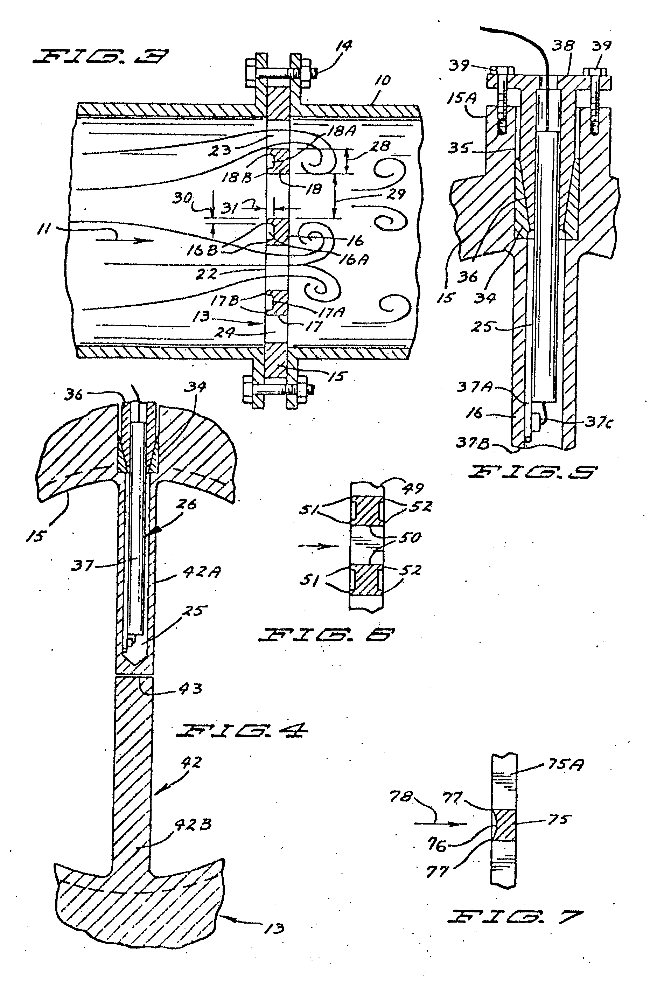

**Journal of Society Instrument Control
Engineering (JAPAN) Vol. 10 3 Issued March
1971, Yamasaki et al "A Karmen Vortex
Flowmeter" Pg. 173—188, see Figure 3.4.**

(73) Proprietor: **Rosemount Inc.**
**12001 West 78th Street**
**Eden Prairie, MN 55344 (US)**

(72) Inventor: **FRICK, Roger, L.**
**17951 Evenston Road**
**Eden Prairie, MN 55344 (US)**

(74) Representative: **Rennie, Ian Malcolm et al,**
**BOULT, WADE & TENNANT 27 Furnival Street**
**London EC4A 1PQ (GB)**

Courier Press, Leamington Spa, England.

# Vortex shedding flowmeter construction

Background of the invention

1. Field of the invention

The present invention relates to vortex shedding flowmeters having flow obstruction bodies to generate vortices and mountings for sensors used with such flowmeters.

2. Prior art

In the prior art various flowmeters have been advanced which use vortex formation for flow sensing. For example, a T shape cross-section flow obstruction bar is shown in United States Patent No. 3,972,232, and it has a significantly narrower main body section than the head of the T.

Likewise, a flow sensitive body which includes an irregular cross-section is shown in Figure 8 of Patent No. 3,116,639, and in other figures of this patent, such as in Figures 11 and 12, bodies having modified cross-sections are illustrated. In each of the configurations shown in Patent No. 3,116,639, the leading or upstream facing surface is contoured to provide for laminar flow. By way of contrast, in the present device, the upstream facing surface is provided with small projections which tend to cause the formation of the vortices along the lateral edges of the flow obstruction bars across a wide range of Reynolds numbers and with high response characteristics.

Additional T shaped flow obstruction bodies, and also bodies which include triangular cross-section and other somewhat irregular sections, other than rectilinear or cylindrical are shown in United States Patent No. 3,572,117. Again the particular shapes and operation are different from that shown in the present application.

U.S. Specification No. 3,693,438 shows small recesses along side portions of a vortex forming bar but these recesses do not cause any reversal in the direction of flow nor do they cause any lateral outward flowing; they do not disrupt or disturb the flow direction of the very smooth flow pattern around the bar.

Summary of the invention

According to the invention, a vortex flowmeter comprising a support member, a flow obstruction body mounted on said support member and having a first surface portion which faces toward a normal direction of flow to be measured, said flow obstruction body having second surface portions facing laterally to the direction of flow, means on said flow obstruction body defining at least one protuberance forming trip member projecting from the flow facing first surface in a direction at least partially opposite from the normal fluid flow direction is characterized by said trip member being positioned adjacent one of said second laterally facing surface portions and positioned to cause fluid which impinges upon said first surface portion of said flow obstruction body to separate as it impinges on the flow facing surface to start and enhance a swirling tendency in the fluid flow as the fluid flows past the one lateral facing surface portion of the flow obstruction body, and sensing means to sense vibrations of said flow obstruction body caused by formation of vortices around said trip member of said body.

The above construction provides a vortex shedding flowmeter having a flow obstruction body, e.g. bars, configured with selected cross-section features to enhance formation of vortices across a wide range of Reynolds numbers of the flowing fluid. The flowmeter may comprise a flat plate-type device which includes an outer rim or ring that holds the bars in place. Preferably the flow obstruction bars are arranged with a plurality of bars side by side spaced across the diameter of a flow pipe or conduit.

The cross-sectional configurations of the flow obstruction bars or bodies have small protrusions or irregularities (called "trips" herein) on face portions of the bar facing in the direction of the flow. The protrusions tend to cause the flow which is moving laterally after impinging on the front surface of the bar to change direction abruptly as the diverted fluid turns to flow past the bar. The protrusions aid in the formation of the vortices along the lateral sides of the flow obstruction bars (lateral sides means the sides of the bars which generally face laterally or transversely relative to the direction of flow through the conduit). Various forms of the invention disclosed all include a type of protrusion which, after the flow has changed direction as it strikes the bar and separates in lateral direction, cause an abrupt change of direction of more than 90° as the flow returns to the normal direction of flow through the conduit.

Various forms of the invention are disclosed, for example a concave recess in the forward facing surface of a generally rectilinear cross-section bar causes the flow to change direction in a manner to enhance vortex formation.

The small protrusions may extend from the surfaces of rectangular cylindrical bars. In such a case, the protrusions will be generally radially extending fins or plates and would extend radially at an angle of about 30° to 45° to the right and to the left of a bisecting plane parallel to the flow axis. This positioning causes the flow impinging on the cylindrical bar to change direction at the fin or protrusion as the flow turns past the bar setting up a tendency to "swirl" and thus enhance the formation of vortices.

While the cross-sectional configurations of the bars shown can be used in flowmeters using single bars or multiple bars, the preferred form, as stated previously, is in a multiple bar flowmeter.

The sensor that is used to detect vibration of the bars caused by formation of vortices can be any desired type of sensor such as a semiconductor strain gauge sensor. The sensor is mounted in the manner to minimize pipe or conduit vibration problems, and also to permit the sensor to be easily inserted and removed from the flowmeter without removing the flowmeter from the conduit with confidence that the sensor itself will not be improperly mounted and will be relatively uninfluenced by vibrations on the supporting pipe or conduit itself.

Brief description of the drawings

Figure 1 is a vertical sectional view through a typical flow conduit having a flow sensor made according to the present invention installed therein;

Figure 2 is a sectional view taken on line 2—2 with parts in section and parts broken away;

Figure 3 is a sectional view taken as on line 3—3 in Figure 1;

Figure 4 is an enlarged sectional view showing the sensor mounting in a center flow obstruction body modified from the sensor of Figure 1;

Figure 5 is a further enlarged fragmentary cross-sectional view of the sensor and its mounting;

Figure 6 is a sectional view taken as on the same line as Figure 3 through a single flow obstruction bar showing a bidirectional flow sensing vortex forming bar made according to the present invention;

Figure 7 is a sectional view taken substantially on the same line and in the same position as Figure 6 showing a modified form of the flow obstruction bars made according to the present invention.

Description of the preferred embodiments

Figure 1 shows a fluid carrying conduit or pipe 10 which is carrying fluid generally in the direction indicated by arrow 11 and which has a pair of flange type couplers 12, one on each of two conduit sections, which are spaced apart to receive and sandwich a vortex flowmeter plate assembly illustrated generally at 13. The flanges are held together with suitable coupling bolts 14, and they clamp and seal onto the vortex shedding flowmeter plate 13.

The flowmeter plate 13 in this form of the invention is made from a circular plate with orifices or flow apertures cut in the plate to define the cross bars. As can perhaps best be seen in Figure 2, there is a perimeter or annular rim 15, and a center flow obstructing bar 16, a flow obstructing bar 17 adjacent a first side thereof, and a flow obstructing bar 18 adjacent a second side thereof. These bars or bodies 16, 17 and 18 are separated by suitable orifices or apertures (or slots) 21 and 22 on opposite sides of the center body 16 which are of equal size and shape, and orifices or apertures (or slots) 23 and 24 to the outside of the bars 17 and 18, which orifices 23 and 24 are also of equal shape and size. The outer edges of each of the orifices or apertures indicated at 21A, 22A, 23A and 24A are part circular and these edges define the effective flow diameter D of the flowmeter assembly.

The flowmeter plate 13 is relatively thin in direction of the fluid stream 11, and the flow obstruction bodies or bars 16, 17 and 18 are formed generally rectilinear but with edge irregularities formed by recesses as shown and explained in connection with Figures 2 and 3. The bars 16, 17 and 18 are made to cause flow separation, causing vortices to be formed and shed from the bars along their side surfaces (the surfaces parallel to the flow direction).

A suitable motion sensor 26 is placed into a receptacle 25 and can be held in the receptacle in a suitable manner as will be explained. The sensor 26 is utilized for sensing vibrations of the center bar 16 caused by the formation and shedding of vortices as the fluid in the conduit flows past the bars.

When a plurality of spaced obstruction bodies are placed across the conduit and are commonly mounted to a rim as shown, the rim or plate can be slipped into position in place of a common orifice plate without modifying existing mounting members.

The center bar 16 is centered on a diametral line of the flow conduit, and the bars 17 and 18 are each spaced an equal distance laterally from the center bar and also an equal distance from the adjacent sides of the conduit.

It has been found that when a plurality of the obstruction bars or bodies such as 16, 17 and 18 which are transversely aligned across the conduit are utilized, the formation of vortices will tend to shift across the diameter of the conduit, so that primary or strong vortices are formed alternately along the sides of the bars. Note that no upstream or downstream bars or obstructions are used, but only the bars centered on a common plane perpendicular to the flow direction.

Briefly, the vortices are shown by the curled lines in Figure 3. The vortices will switch back and forth so that vortices are formed between bars 16 and 18, and then between bars 16 and 17 alternately. Such vortices are shown in a downstream direction from the flowmeter of the present invention in Figure 3.

The switching of the vortices back and forth causes vibration in the bars.

The plate 13 does have a tang portion indicated generally at 15A extending outwardly beyond the peripheral rims 15 of the orifice plate. The tang portion 15A is used for mounting the motion sensor assembly 26, which is mounted into receptacle 25 in the center bar or flow obstruction body 16. The receptacle or opening extends downwardly substantially to the midpoint of the bar, or approximately half-way across the conduit.

Adjacent the rim portion 15, the opening 25 has a larger bore portion 35 near its outer end. A split chuck member or holder 34 (in two or more sections) having an interior (inwardly facing) frusto conical surface is positioned against a shoulder formed at the inner end of bore 35 in the rim 15 of the plate. The sensor 26 has a probe portion 37 extending through a collet member 36, which has an exterior (outwardly facing) frusto conical surface that mates with and forms an interference or contact fit with the interior surface of chuck 34. The probe portion 37 is preferably made of a ceramic material. The collet 36 may be shrink fitted onto the probe portion 37 or may be slitted so that it will clamp onto the probe as the collet 36 and chuck 34 are forced together in a chucking action.

The probe portion 37 of the sensor 26 extends into the opening 25 and as shown a flexible, cantilevered sensing beam 37A is fixed to and projects from the end of the probe 37. The sensing beam carries a small non-conductive ball 37B which bears against the interior surface of opening 25 with a slight resilient force. The beam carries a strain gage 37C (a semiconductor strain gage is preferred) to sense deflection of the beam.

The center bar 16 vibrates laterally as the vortexes are shed, in a known manner. The beam 37B will flex, because probe 37 remains stationary, and the strain gage 37C delivers an output signal that indicates flow rate as a function of frequency of flexing. Suitable circuitry may be used for providing a useful output signal as a function of the signal from the strain gage.

The sensor 26 has an external fastening flange 38 at the upper end thereof. In the form shown, the flange 38 is attached to the collet 36 which carries the probe portion 37, and flange 38 and collet 36 are urged downwardly through the use of screws 39 threaded into the tang portion 15A of the flowmeter. The screws 39 are tightened to a desired level to exert a force on the collet 36 urging it tightly in position against the surface of chuck 34 and thus tightening collet 36 onto probe portion 37. Because the chuck 34 and collet 36 can be quite accurately machined in respect to the length of the probe portion 37 of the sensor and of the opening 25, the mating surfaces of chuck 34 and collet 36 serve to position the beam 37A at the end of the probe portion 37 within the opening 25 so that the end of the beam 37A does not engage the end of the opening 25.

The physical support between the flowmeter and the sensor assembly 26 is at the chuck member 34 and collet member 36. The sensor is clamped at the rim 15 rather than held at the vibrating bar or body itself. The use of the tightly engaged tapered surfaces cause the split collet to be forced against the interior surfaces of the bore 35 to properly position the probe portion 37 and beam 37A to sense vibrations of the flow obstruction body, and at the same time isolate the sensor assembly 26 and beam 37A from external shocks or vibrations in the conduit or pipe 10.

The rim 15 is clamped tightly to the conduit flanges, and the members 34 and 36 align with the rim at its mounting area. The support for the sensor at members 34 and 36 is rigid and thus the sensing beam 37A will not be flexed substantially by vibration of the flow conduit. The flowmeter is thus relatively insensitive to external shock and vibration but senses the vibrations of the bars caused by the vortices.

As a further feature, the threaded members 39 can be removed and the entire sensor assembly 26 can be pulled out easily through the external opening in the tang 15A. When replacing the sensor assembly the surfaces of members 34 and 36 will again mate and position the probe portion 37 of the sensor 26 properly in the aperture or opening 25 of the center flow obstruction body 16 to sense the vibrations that are set up in the body or bar.

The leads from the strain gage 37C may extend through openings in the probe portion 37 and flange 38.

A modified form of the sensor is shown in Figure 4. In order to enhance the vibration of the center bar or flow obstruction body particularly at low flows, the bar 42, which corresponds to the bar or body 16 in Figures 1 through 3, has a slit formed by a narrow transverse cut indicated generally at 43 which separates the bar 42 into two sections 42A and 42B. The sections 42A and 42B are each fixed to the support rim 15 as in the previous form of the invention, and cantilever from the rim. The slit 43 is of sufficiently small size so that only a very small proportion of the fluid flows through this slit. Thus, there is no flow between the facing ends of the two bar portions 42A and 42B. However, the vibrations of the bar portions is enhanced and thus the sensor 26 will provide a greater signal and more easily sensed output, particularly at low flows, with the slit in the flow obstruction body.

In actual use, the slit has been made very narrow, in the range of 0.25 mm or so, in order to permit enhanced vibration of the flow obstruction body portions without permitting flow through the slit itself.

Referring to Figures 2 and 3, in particular, each of the bars or bodies 16, 17 and 18 has a cross-section which includes a longitudinally extending recess indicated at 16A, 17A and 18A, respectively, on the side surface thereof facing the flow formed by pairs of small protrusions or protuberances 16B, 17B and 18B which are also called "trips" or "trip members" herein. The main portions of the flow obstruction bodies form generally evenly contoured symmetrical bodies. The protrusions are at each of the forward side edges of each of the bars. The lateral side surfaces which face other bars are planar. The fluid that is flowing axially in the conduit or pipe as shown by arrow 11 spreads or moves laterally to this flow direction as the fluid impinges the flow facing surface of the respective bars. The protrusions or trips 16B, 17B and 18B tend to cause a swirling as the separated fluid flows over these protrusions and turns to flow along the transversely facing surface portion of the bars. The flow past the transversely facing surfaces is parallel to direction of arrow 11. The protrusions tend to set up a swirling action by causing a partial reversal of the direction of the fluid as the fluid moves past the protrusions and flow obstruction body, and enhance the formation of vortices along the facing lateral surfaces of the bars as shown in Figure 3.

The bars 16, 17 and 18 are supported at the top and bottom on rim or ring 15, and will tend to vibrate transversely to the flow direction at a frequency depending upon rate of flow as indicated by formation of vortices. Ignoring the trip members 16B, 17 and 18B the flow obstruction bodies have main portions which have symmetrical rectangular cross-sections about a bisecting plane parallel to the flow direction. The trips or protrusions adjacent the forward edges of the side surfaces of the bars (at the corners) are of size and shape sufficient to cause shedding of stronger vortices than a body of the size and shape of the main portion without the trip members. Also stronger vortices are formed with the trip than with a body of a size equal to the size defined by a body including the trips.

In the preferred embodiment shown in Figure 3, assuming that the internal diameter of the flow opening is equal to "D", the spacing between the facing surfaces of bars 16 and 18 as shown at 29 is preferably .20D. The trip depth shown in direction transverse to the flow direction as indicated at 30 is .007D. The height of the protrusions in direction parallel to the flow direction to be sensed is in the range of .015D. This dimension is indicated at 31. The width of the bars or bodies in direction transverse to the flow direction is preferably in the range of .085D. This dimension is indicated at 28. As shown dimension 30 is about .085 of the lateral width dimension 28. Related to the lateral width of the bar the width of the protrusions (dimension 30) preferably is not substantially greater than .1 times the transverse width 28 of the bars.

The small protrusions are kept narrow and not very high (in direction of flow) to regularly aid in the release or "tripping" of vortices along the side surfaces of the flow obstruction bodies. The protrusions project the desired amount from the adjacent surface portions of the flow obstruction bodies.

In Figure 6, a typical bidirectional flow sensitive, flow obstruction bar or body is illustrated. In this particular instance, the flow obstruction bodies 50 are mounted on a rim or ring 49 as previously explained and each includes a first pair of surface irregularities or portions 51, 51 at the lateral sides of the flow obstruction body adjacent one face surface. These small protrusions or trips 51, 51 are identical to those shown on the bars of Figure 3. Each of the flow obstruction bodies 50 has protrusions 52, 52 at the edges of the oppositely facing surfaces. Thus, each body 50 is substantially symmetrical with respect to the plane of the mounting ring 49 and operates identically regardless of the direction of flow relative to the sensor. The protrusions or irregularities 51 and 52 cause enhanced generation of vortices along the side surfaces of the bodies as previously described.

In Figure 7, a modified form of the invention is illustrated. In this particular form a flow obstruction bar or body 75 may be mounted in a rim or ring 75A alone or with additional bodies positioned as shown in Figures 2 and 3. The body 75 has a part cylindrical surface recess 76 which forms trips or protrusion edge portions 77, 77 adjacent the lateral side edges of the body. The surface 76 is part circular cross-section and extends along the longitudinal length of the flow obstruction body 75 a desired amount. Flow in this instance is in direction indicated by the arrow 78. The body 75 may also have a similar recess to that shown at 76 on the oppositely facing surface to provide bidirectional flow capabilities as well. The outer end portion 77 of the flow facing surface provides the protrusions forming trips to enhance vortex formation along the bars.

In all forms of the invention, the trips or protrusions effectively cause change of direction of flow, which first tends to go toward the lateral sides of the bar or generally perpendicular to the normal direction of flow and then changes direction quickly at the side edges of the flow obstruction body to enhance vortex formation. A flow direction change over 90° is caused by each of the "trips" as the flow turns downstream past the bodies or bars. This tends to start early generation of a vortex.

The trips formed on the flow obstruction bodies extend substantially the entire length of the body itself from adjacent the ends where it is supported with respect to the annular ring or orifice plate. The length of the protuberances or trips described can be varied to suit existing conditions.

The mounting members for the sensor assembly are annularly aligned with the flowmeter support rim and thus the clamping of the support rim between the flanges on the conduit sections clamps the region where the sensor is supported to provide vibration isolation.

The mounting reduces acceleration sensitivity, and the signal from the sensor accurately represents flow conditions.

## Claims

1. A vortex flowmeter (13) comprising a support member (15), a flow obstruction body (16, 17, 18, 42, 50 or 75) mounted on said support member and having a first surface portion (16A, 17A, 18A or 76) which faces toward a normal direction of flow to be measured, said flow obstruction body having second surface portions facing laterally to the direction of flow, and means on said flow obstruction body defining at least one protuberance-shaped trip member (16B, 17B, 18B, 51, 52 or 77) characterised in that said trip member projects from the flow facing first surface in a direction at least partially opposite from the normal fluid flow direction, and is, positioned adjacent one of said second laterally facing surface portions thereby to enhance vortex formation as the fluid which is flowing laterally after impinging on said first surface portion turns past said trip member to flow past said second lateral surface portion, sensing means (26) being provided to sense vibrations of said flow obstruction body caused by formation of vortices around said trip member of said body.

2. The flowmeter of claim 1 further characterized by said flow obstruction body having a longitudinal axis and a cross-section perpendicular to the longitudinal axis which is substantially symmetrical with respect to a plane defined by said axis and parallel to the direction of fluid flow and further characterized by a pair of protuberances (16, 17 or 18) mounted on the flow obstruction body and each protuberance is spaced from said plane.

3. The flowmeter of Claim 2 further characterized in that the protuberances are of a size which causes any fluid flow following the surface of the flow obstruction body as it flows past the body to change direction through more than ninety degrees as such fluid flows along the flow obstruction body surfaces and around said flow obstruction body.

4. The flowmeter of Claim 2 further characterized by said cross-section of the main portion of said flow obstruction body being generally rectilinear, and said protuberances (77) being formed by a concave part cylindrical surface (76) defined on the flow facing surface of said flow obstruction body to form relative sharp edge protuberances projecting toward the direction of flow from the main portions of said flow obstruction body adjacent the lateral side edges thereof.

5. The flowmeter of Claim 2 further characterized by said flow obstruction body being generally rectilinear in cross-section, and the protuberances comprising raised ribs (16B, 17B, 18B) adjacent the lateral side edges of said flow obstruction body.

6. The flowmeter of Claim 2 further characterized by said flow obstruction body (50) being symmetrical with respect to a second bisecting plane passing longitudinally through said flow obstruction body and positioned generally perpendicular to the normal flow direction through said conduit, said flow obstruction body (50) thereby having protuberances (51, 52) adjacent both the flow facing and downstream portions of said body.

7. The flowmeter of Claim 1, wherein said support comprises a peripheral member (15), said flow obstruction body being supported at both of its opposite ends on said peripheral member.

8. The flowmeter of Claim 1, wherein said flow obstruction body (42) is formed into two sections (42A, 42B), said sections being on a common longitudinal axis and supported at ends adjacent the periphery of the flow conduit, the flow obstruction body sections having facing end surfaces separated by a space (43) sufficiently small to prevent substantial flow between said end surfaces.

9. The flowmeter of Claim 1 further characterized by the support comprising an annular rim (15) and the flow obstruction body (42) being two independent cantilevered flow obstruction body sections (42A, 42B) separated by a narrow slit (43) across the cross-section of said flow obstruction body.

10. The flowmeter of Claim 9 further characterized by said slit (43) being on the order of 0.25 mm in width as measured along the longitudinal axis of said flow obstruction body.

11. The flowmeter of Claim 9 further characterized by the longitudinal axis of said flow obstruction body (42) extending along a generally diametral line of said rim.

12. The flowmeter of Claim 11 further characterized by one of said flow obstruction body sections (42A, 42B) having an opening (25) defined therein extending along the longitudinal axis, and means mounted in said opening (26) to sense vibratory movements of said one section.

## Revendications

1. Débitmètre à tourbillons (13), comprenant un organe de support (15), un corps d'obstruction d'écoulement (16, 17, 18, 42, 50 ou 75) monté sur cet organe de support et présentant une première partie de surface (16A, 17A, 18A ou 76) qui fait face à la direction normale du courant à mesurer, ce corps d'obstruction d'écoulement présentant des secondes parties de surface qui sont dirigées transversalement par rapport à la direction du courant et des éléments qui forment, sur le corps d'obstruction d'écoulement, au moins un organe de déclenchement de tourbillon (16B, 17B, 18B, 51, 52 ou 77) en forme de protubérance, caractérisé en ce que cet organe déclenchement fait saillie sur la première surface faisant face au courant, dans une direction au moins partiellement opposée au sens normal d'écoulement du fluide, et en ce qu'il est en position adjacente à l'une des secondes parties de surface dirigées transversalement, de manière à accentuer la formation de tourbillons là où le fluide, qui s'écoule latéralement après avoir frappé la première partie de surface, contourne l'organe de déclenchement pour s'écouler le long de la seconde partie latérale de surface, des moyens capteurs (26) étant prévus pour détecter les vibrations du corps d'obstruction d'écoulement, dues à la formation de tourbillons autour de l'organe de déclenchement de ce corps.

2. Débitmètre selon la revendication 1, caractérisé en outre en ce que le corps d'obstruction d'écoulement présente un axe longitudinal et une section, perpendiculaire à cet axe longitudinal qui est pratiquement symétrique par rapport à un plan défini par cet axe et parallèle à la direction d'écoulement du fluide, et en ce qu'il est prévu une paire de protubérances (16B, 17B ou 18B) sur le corps d'obstruction d'écoulement, chaque protubérance étant à distance dudit plan.

3. Débitmètre selon la revendication 2, caractérisé en outre en ce que les protubérances ont des dimensions telles qu'elles amènent tout courant de fluide qui suit la surface du corps d'obstruction d'écoulement à effectuer, au moment où il franchit le corps, un changement de direction de plus de 90° tandis que ce fluide s'écoule le long des surfaces du corps d'obstruction d'écoulement et qu'il contourne ce corps d'obstruction d'écoulement.

4. Débitmètre selon la revendication 2, caractérisé en outre en ce que la section transversale de la partie principale du corps d'obstruction d'écoulement est généralement rectiligne, et en ce que les protubérances (77) sont formées par une surface concave en segment circulaire (76) sur la surface du corps d'obstruction d'écoulement qui fait face au courant, de manière à former des protubérances à arête relativement aiguë qui font saillie vers la direction du courant sur les parties principales du corps d'obstruction d'écoulement, en position adjacente aux bords des côtés latéraux de celui-ci.

5. Débitmètre selon la revendication 2, caractérisé en outre en ce que le corps d'obstruction d'écoulement est généralement rectiligne en coupe transversale, et en ce que les protubérances sont constituées par des nervures surélevées (16B, 17B, 18B) adjacentes aux bords des côtés latéraux du corps d'obstruction d'écoulement.

6. Débitmètre selon la revendication 2, caractérisé en outre en ce que le corps d'obstruction d'écoulement (50) est symétrique par rapport à un second plan bissecteur qui passe longitudinalement par le corps d'obstruction d'écoulement et est généralement perpendiculaire à la direction normale du courant à travers la conduite, le corps d'obstruction d'écoulement (50) présentant ainsi des protubérances (51, 52) adjacentes à la partie du corps qui fait face au courant et à celle qui regarde vers l'aval.

7. Débitmètre selon la revendication 1, caractérisé en ce que le support comprend un organe périphérique, le corps d'obstruction d'écoulement étant supporté à deux extrémités opposées par cet organe périphérique.

8. Débitmètre selon la revendication 1, caractérisé en ce que le corps d'obstruction d'écoulement (42) est formé en deux parties (42A, 42B), ces parties se trouvant sur un axe longitudinal commun et étant supportées par leurs extrémités adjacentes à la périphérie de la canalisation, les parties du corps d'obstruction d'écoulement ayant leurs surfaces d'extrémité qui se font face séparées par un intervalle (43) suffisamment petit pour exclure un écoulement appréciable entre ces surfaces d'extrémité.

9. Débitmètre selon la revendication 1, caractérisé en outre par un support comprenant une couronne annulaire (15), le corps d'obstruction d'écoulement (42) étant constitué par deux sections indépendantes en porte-à-faux de corps d'obstruction d'écoulement (42A, 42B), séparées par une fente étroite (43) qui traverse la section transversale du corps d'obstruction d'écoulement.

10. Débitmètre selon la revendication 9, caractérisé en outre en ce que la fente (43) a une largeur de l'ordre de 0,25 mm, mesurée le long de l'axe longitudinal du corps d'obstruction d'écoulement.

11. Débitmètre selon la revendication 9, caractérisé en outre en ce que l'axe longitudinal du corps d'obstruction d'écoulement (42) s'étend le long d'une ligne généralement diamétrale de la couronne.

12. Débitmètre selon la revendication 11, caractérisé en outre en ce que l'une des sections (42A, 42B) du corps d'obstruction d'écoulement est percée d'une ouverture (25) qui s'étend le long de l'axe longitudinal, et en ce que des éléments (26) sont montés dans cette ouverture pour détecter les mouvements vibratoires de la section en question.

**Patentansprüche**

1. Wirbeldurchflußmesser mit einem Trageelement (15), einem am Trageelement befestigten Strömungshindernis (16, 17, 18, 42, 50 oder 75), das einen ersten, der normalen Richtung der zu messenden Strömung zugekehrten Oberflächenbereich (16A, 17A, 18A oder 76), sowie einen zweiten, der Strömungsrichtung lateral zugekehrten Oberflächenbereich aufweist, und mit Einrichtungen auf dem Strömungshindernis, die wenigstens ein vorsprungförmiges Auslöseteil (16B, 17B, 18B, 51, 52 oder 77) bilden, dadurch gekennzeichnet, daß das Auslöseteil vom ersten, der Strömungsrichtung zugekehrten Flächenbereich wenigstens teilweise in entgegengesetzter Richtung zur normalen Fluid-Strömungsrichtung absteht und an einen der zweiten, der Strömungsrichtung lateral zugekehrten Oberflächenbereiche angrenzt, um die Wirbelbildung zu verstärken, wenn das Fluid, das nach dem Aufprall auf den ersten Oberflächenbereich in Querrichtung strömt, am Auslöseteil und am zweiten lateralen Oberflächenbereich vorbeiströmt, und daß Abfühleinrichtungen (26) vorgesehen sind, die die durch Wirbelbildungen um das Auslöseteil des Strömungshindernisses hervorgerufenen Vibrationen des Strömungshindernisses abfühlen.

2. Durchflußmesser nach Anspruch 1, dadurch gekennzeichnet, daß das Strömungshindernis eine Längsachse und eine zur Längsachse senkrechte Querschnittsform aufweist, die bezüglich einer durch die Längsachse definierten Ebene, die parallel zur Fluidströmungsrichtung liegt, im wesentlichen symmetrisch ist, und daß die Vorsprünge (16, 17 oder 18) auf dem Strömungshindernis vorgesehen sind, die jeweils von dieser Ebene beabstandet sind.

3. Durchflußmesser nach Anspruch 2, dadurch gekennzeichnet, daß die Vorsprünge eine Größe aufweisen, die bewirkt, daß ein Fluidstrom, der bei Vorbeiströmen am Strömungshindernis der Oberfläche des Strömungshindernisses folgt, die Richtung um mehr als 90 Grad ändert, wenn das Fluid entlang den Strömungshindernis-Oberflächen und um das Strömungshindernis herum strömt.

4. Durchflußmesser nach Anspruch 2, dadurch gekennzeichnet, daß der Querschnitt des Hauptteils des Strömungshindernisses im wesentlichen geradlinig ist, und daß die Vorsprünge (77) durch eine konkave Teilzylinderfläche (76) gebildet werden, die auf der der Strömung zugekehrten Oberfläche des Strömungshindernisses definiert ist, um relativ scharfkantige Vorsprünge zu bilden, die von den Hauptteilen des Strömungshindernisses neben den lateralen Seitenkanten des Strömungshindernisses zur Strömungsrichtung hin vorstehen.

5. Durchflußmesser nach Anspruch 2, dadurch gekennzeichnet, daß das Strömungshindernis querschnittsmäßig im wesentlichen geradlinig ist, und die Vorsprünge erhabene Rippen (16B, 17B, 18B) aufweisen, die an die lateralen Seitenkanten des Strömungshindernisses angrenzen.

6. Durchflußmesser nach Anspruch 2, dadurch gekennzeichnet, daß das Strömungshindernis (50) bezüglich einer zweiten Symmetrieebene symmetrisch ist, die längs durch das Strömungshindernis hindurchgeht und daß das Strömungshindernis (50) im wesentlichen senkrecht zur normalen Strömungsrichtung durch die Leitung angeordnet ist, wobei das Strömungshindernis (50) Vorsprünge (51, 52) neben sowohl den der Strömungsrichtung zugekehrten als auch den der Strömungsrichtung abgewandten Bereichen des Strömungshindernisses aufweist.

7. Durchflußmesser nach Anspruch 1, dadurch gekennzeichnet, daß das Trageelement ein peripheres Teil (15) ist, und daß das Strömungshindernis an seinen beiden gegenüberliegenden Enden vom peripheren Teil gehalten wird.

8. Durchflußmesser nach Anspruch 1, dadurch gekennzeichnet, daß das Strömungshindernis (42) aus zwei Abschnitten (42A, 42B) besteht, die sich auf einer gemeinsamen Längsachse befinden und an Enden neben der Peripherie der Strömungsleitung gehalten werden, und daß die Strömungshindernis-Abschnitte einander zugewandte Endflächen aufweisen, die durch einen Zwischenraum (43) voneinander getrennt sind, der zur Verhinderung eines wesentlichen Stroms zwischen den Endflächen genügend klein ist.

9. Durchflußmesser nach Anspruch 1, dadurch gekennzeichnet, daß das Trageelement eine ringförmige Randfassung (15) ist, und daß das Strömungshindernis (42) aus zwei voneinander unabhängigen, freitragenden Strömungshindernisabschnitten (42A, 42B) besteht, die durch einen schmalen Spalt (43) über den Querschnitt des Strömungshindernisses voneinander getrennt sind.

10. Durchflußmesser nach Anspruch 9, dadurch gekennzeichnet, daß der Spalt (43) eine entlang der Längsachse des Strömungshindernisses gemessene Breite in der Größenordnung von 0,25 aufweist.

11. Durchflußmesser nach Anspruch 9, dadurch gekennzeichnet, daß die Längsachse des Strömungshindernisses (42) auf einer im wesentlichen diametralen geraden Randeinfassung liegt.

12. Durchflußmesser nach Anspruch 11, dadurch gekennzeichnet, daß einer der Strömungshindernis-Abschnitte (42A, 42B) eine darin ausgebildete und sich in Richtung der Längsachse erstreckende Öffnung (25) aufweist, und daß in dieser Öffnung (26) Einrichtungen zum Abfühlen der Vibrationsbewegungen dieses einen Abschnitts abgebracht sind.

FIG. 2

FIG. 1

0015926

FIG. 3

FIG. 5

FIG. 6

FIG. 4

FIG. 7

2